Europäisches Patentamt

**European Patent Office**

**Office européen des brevets**

(19)

(11) Veröffentlichungsnummer: **0 038 368**
**B1**

(12) **EUROPÄISCHE PATENTSCHRIFT**

(45) Veröffentlichungstag der Patentschrift:
**09.11.83**

(51) Int. Cl.³: **F 16 B 7/04**

(21) Anmeldenummer: **80102060.3**

(22) Anmeldetag: **17.04.80**

(54) **Schiebeklemme.**

(43) Veröffentlichungstag der Anmeldung:
**28.10.81 Patentblatt 81/43**

(45) Bekanntmachung des Hinweises auf die Patenterteilung:
**09.11.83 Patentblatt 83/45**

(84) Benannte Vertragsstaaten:
**AT BE CH FR GB IT LI LU NL SE**

(56) Entgegenhaltungen:
**DE - B - 2 211 523**
**DE - B - 2 440 454**
**DE - B - 2 505 510**
**DE - U - 7 002 062**
**DE - U - 7 411 984**
**DE - U - 7 935 227**
**GB - A - 1 116 502**
**US - A - 3 150 703**

(73) Patentinhaber: **Heidrich geb. Weber, Heidi,
Ludwigstrasse 20, 6701 Waldsee / Pfalz (DE)**

(72) Erfinder: **Heidrich, Roland, Ruhrorterstrasse 1,
D-6800 Mannheim 81 (DE)**

(74) Vertreter: **Ratzel, Gerhard, Dr., Seckenheimer
Strasse 36a, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Schiebeklemme

Die Erfindung betrifft eine Klemmscheibe für Schienen von unterschnittenem C-Profil, ausgebildet als im wesentlichen rechteckige Platte, die mit den Längsseiten parallel zur Schiene durch den Raum zwischen den Schenkeln der offenen Seite des C-Profils geht und, nach einer Drehung um 90°, mit den Breitseiten parallel zur Schiene in den Raum unter diese Schenkel paßt.

Solche Schienen werden überall dort angebracht, wo man an beliebiger Stelle eine oder mehrere Halterungen, die insbesondere auch wieder gelöst werden können, anbringen möchte. Als Halterung dient dabei eine Klemmscheibe, die in ein offenes Ende der C-Profilschiene eingeschoben wird und bis an die Stelle weiter geschoben wird, an der die Halterung gewünscht ist. Dort wird dann die Klemmscheibe gegen die Schenkel der C-Profilschiene verklemmt, indem eine Schraube angezogen wird, die die Klemmscheibe von dem Boden der C-Profilschiene abhebt. Ist die Klemmscheibe in dieser Weise in der C-Profilschiene verklemmt worden, so läßt sie sich nicht mehr verschieben und kann daher als Halterung dienen. Die C-Profilschiene selbst ist in der Regel in herkömmlicher Weise an ihrer Unterlage befestigt. Der Vorteil solcher Halterungssysteme bestehend aus C-Profilen und Klemmscheiben liegt darin, daß die Halterung an beliebigem Ort angebracht werden kann und auch wieder leicht gelöst werden kann.

Bekannt sind solche Klemmscheiben schon seit langem; sie bestehen einfach aus einer Grundplatte mit einem zurückversetzten erhöhten Oberteil, so daß die Grundplatte unter die Schenkel der C-Profilschiene hineingeschoben werden kann und das zurückversetzte Oberteil in den Freiraum der C-Profilschiene paßt. Eine so ausgebildete herkömmliche Klemmscheibe kann sich dann nicht mehr innerhalb der C-Schiene verdrehen, wenn die Klemmschraube angedreht werden muß. Auch wird dadurch eine nicht verdrehbare Halterung der Klemmscheibe in der C-Schiene bewirkt, was bei der Anwendung häufig erwünscht ist.

Der Nachteil dieser herkömmlichen Klemmscheiben besteht darin, daß sie in die C-Profilschiene nur dann hineingeschoben werden können, wenn jene mindestens ein offenes Ende besitzt. Diese Voraussetzung ist in der Praxis jedoch nicht immer erfüllt. Außerdem bedeutet es einen Umstand, in eine lange C-Profilschiene immer erst von einem offenen Ende her bis zur gewünschten Stelle eine Klemmscheibe herbeischieben zu müssen. Ein besonderer Nachteil der herkömmlichen Klemmscheiben besteht aber noch darin, daß es unmöglich ist, zwischen zwei schon festgeklemmte Klemmscheiben noch eine weitere Klemmscheibe zu schieben. Dazu müßten diese beiden vorgenannten Klemmscheiben erst gelöst werden, was jedoch in der Praxis häufig bedeuten würde, die an den Klemmscheiben befestigten Gegenstände gleichermaßen erst abzubauen.

Aus der DE-B-2 440 454 ist demgegenüber ein als Klemmscheibe innerhalb eines komplexen Befestigungselementes dienender Rechteckkörper gemäß der eingangs genannten Gattung bekannt. Dieser Rechteckkörper kann in die Schiene an beliebiger Stelle eingesetzt werden; nach einer Drehung um 90° paßt der Rechteckkörper mit seinen Breitseiten parallel zur Schiene in den Raum unter den Schenkeln der Schiene. Ein solcher Rechteckkörper ist aber in der Schiene damit noch nicht verdrehfest gesichert und kann aus der Schiene herausfallen. Um dies zu verhindern, wird auf den Rechteckkörper ein gesondertes U-förmiges Profilstück gesetzt. Dessen Schenkel besitzen etwa die Breite der offenen Seite des C-Profiles und umfassen die Längsseiten des Rechteckkörpers. Somit müssen bei diesem Befestigungselement wenigstens zwei gesonderte Teile gehandhabt werden, nämlich der Rechteckkörper und das U-förmige Profilstück. Hierbei ist noch ein zusätzliches Problem, daß das U-förmige Profilstück selbst auf dem Rechteckkörper wenigstens so weit gesichert ist, daß es nicht von demselben abfallen kann.

Der Erfindung liegt nun die Aufgabe zugrunde, eine Klemmscheibe zu schaffen, die aus einem einzigen Teil besteht, also ein gesondertes U-förmiges Profilstück nicht mehr erfordert. Somit soll nach der Erfindung schon die Klemmscheibe alleine ein Befestigungselement darstellen, das in der Schiene verdrehfest gesichert ist. Dennoch soll die Klemmscheibe an beliebiger Stelle in die Schiene eingesetzt und herausgenommen werden können. Die damit verbundene Vereinfachung des Gebrauches im Vergleich zu dem wenigstens zweiteiligen Befestigungselement gemäß DE-B-2 440 454 ist offensichtlich.

Diese Aufgabe wird erfindungsgemäß durch eine Klemmscheibe der eingangs genannten Gattung gelöst, bei der an zwei diagonal einander gegenüberliegenden Ecken zurückgesetzte Zungen mit abgeschrägten, erhobenen Gleitflächen und an den beiden anderen diagonal einander gegenüberliegenden Ecken Erhöhungen angeordnet sind und bei der die Zungen und die Erhöhungen so weit über die Oberseite der rechteckigen Platte erhoben sind, daß sie gegen die Schenkel der Schiene von unterschnittenen C-Profil stoßen. Die Zungen sind also gegenüber der Oberseite der Platte, die die Klemmscheibe bildet, erhöht; dabei ist die Erhöhung als abgeschrägte Gleitfläche ausgebildet. Die Zungen sind von der Unterseite der Platte, die die Klemmscheibe bildet, durch eine naturgemäße Aussparung abgesetzt. Dabei können die Zungen gegenüber der Platte, die die Klemmscheibe bildet, freitragend ausgebildet sein oder aber auch durch einen dünnen Steg verbunden sein. Die Erhöhungen auf der Platte können gleichfalls als Zungen ausgebildet sein, sie können aber auch der Einfachheit halber als starre Höcker ausgebildet sein.

Wird nun die erfindungsgemäße Klemmscheibe längsseitig in den Freiraum der C-Profilschiene eingesetzt, so läßt sie sich durch eine Drehung um 90° breitseitig unter die Schenkel der C-Profilschiene in den von ihnen mit dem Boden der C-Profilschienen gebildeten Zwischenraum hineinschieben. Dabei werden die Zungen vermöge der abgeschrägten Gleitflächen in den Zwischenraum unter die Schenkel gedrückt; die Aussparung unter den Zungen dient naturgemäß als Spielraum für die Zungen. Somit läßt sich die erfindungsgemäße Klemmscheibe genau an dem Ort in die C-Profilschiene hineinschieben, an dem eine Halterung gewünscht wird. Nötigenfalls läßt sich die Klemmscheibe auch wieder aus der Schiene herausholen. Dazu müssen die Zungen durch Schraubenzieher mit dünnen Klingen wieder unter die Schenkel der C-Profilschiene gedrückt werden und die erfindungsgemäße Klemmscheibe durch eine Drehung um 90° wieder in die längsseitige Stellung zurückgedreht werden. Dann läßt sie sich einfach wieder aus dem Freiraum der C-Profilschiene herausheben.

Die erfindungsgemäße Klemmscheibe trägt in der Regel wenigstens eine Gewindebohrung. Denn die Klemmscheibe soll durch eine Schraube gegen die Schenkel der C-Profilschiene gepreßt werden; dazu drückt ein Schraubenende gegen den Boden der C-Profilschiene. Vorteilhafterweise besitzt die erfindungsgemäße Klemmscheibe weiterhin wenigstens einen Schlitz an ihrer Oberseite. Dieser Schlitz dient zur Aufnahme der Klinge eines Schraubenziehers, mit Hilfe dessen der Monteur die Klemmscheibe leicht in die C-Profilschiene hineindrehen kann. Wenn die Klemmscheibe nur dünn oder aus Leichtmetall gegossen ist, empfiehlt es sich, zur Stabilisierung der Scheibe an ihrer Oberseite Stabilisierungs-Rippen anzubringen. Diese Rippen können auch dazu dienen, ein Rohr mit einer Gewindebohrung zu stützen.

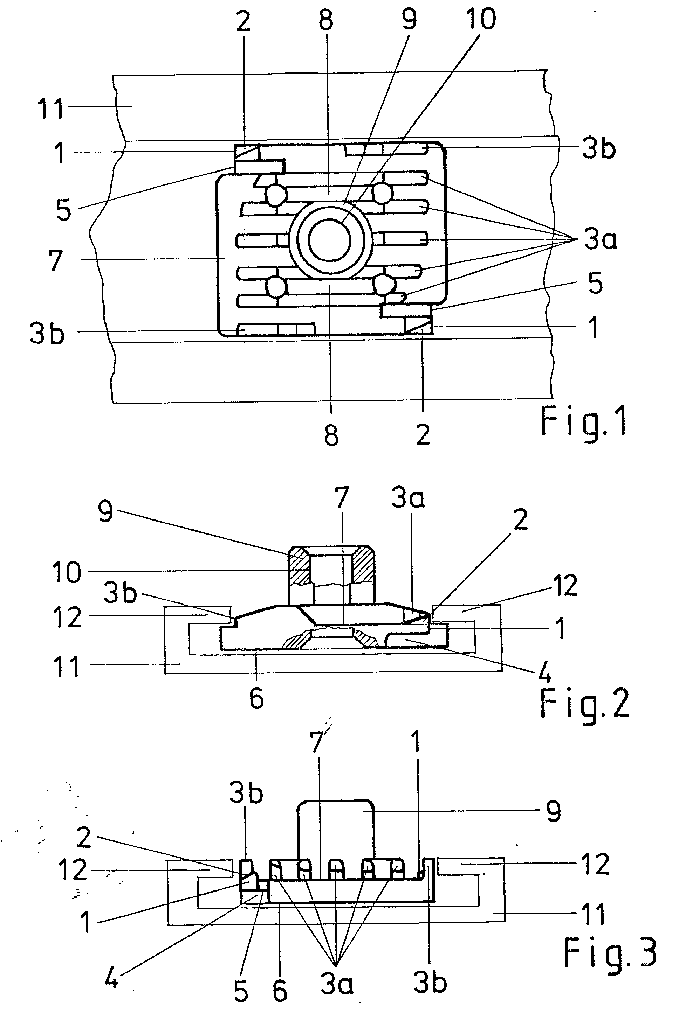

Ein Ausführungsbeispiel der Erfindung ist in der folgenden Abbildung dargestellt, die aus den Fig. 1, 2 und 3 besteht.

In Fig. 1 ist eine erfindungsgemäße Klemmscheibe dargestellt, wie sie längsseitig im Freiraum einer Schiene (11) von unterschnittenem C-Profil liegt. An zwei einander diagonal gegenüberliegenden Ecken sitzen zurückgesetzte Zungen (1) mit abgeschrägten Gleitflächen (2). An den beiden anderen diagonal einander gegenüberliegenden Ecken befinden sich Erhöhungen (3b); in dem abgebildeten Ausführungsbeispiel einer erfindungsgemäßen Klemmscheibe sind diese Erhöhungen (3b) als starre Höcker ausgebildet. An der Oberseite (7) der erfindungsgemäßen Klemmscheibe befinden sich Rippen (3a). Diese Rippen bilden Schlitze (8), in die die Klinge eines Schraubenziehers hineingesteckt werden kann. Dabei ist zu beachten, daß die Rippen (3a) bei den zurückgesetzten Zungen (1) selbst gegenüber der Kante der Platte, die die Klemmscheibe bildet, zurückgesetzt sein müssen; andernfalls ließe sich die Drehung der Klemmscheibe in dem Freiraum der Schiene (11) von unterschnittenem C-Profil nicht durchführen.

In Fig. 2 ist nun die erfindungsgemäße Klemmscheibe durch eine Drehung um 90° in den Zwischenraum unter die Schenkel (12) der C-Profilschiene (11) breitseitig hineingeschoben worden. Deutlich ist zu erkennen, wie die Erhöhung (3b) und die Zunge (1) mit ihrer abgeschrägten Gleitfläche (2) über die Oberseite der erfindungsgemäßen Klemmscheibe hinausstehen, so daß sie gegen die Schenkel (12) der C-Profilschiene (11) anstoßen. In der Mitte der erfindungsgemäßen Klemmscheibe ist als vorteilhafte Ausführungsform ein Rohr (9) befestigt, welches in seinem Inneren eine Gewindebohrung (10) trägt, die bis an die Unterseite (6) der erfindungsgemäßen Klemmscheibe durchstößt. In diese Gewindebohrung (10) läßt sich dann eine Klemmschraube hineindrehen.

In Fig. 3 ist die erfindungsgemäße Klemmscheibe wiederum längsseitig in den Freiraum der C-Profilschiene (11) hineingelegt. Wird nun die erfindungsgemäße Klemmscheibe in den Zwischenraum unter den Schenkeln (12) der C-Profilschiene (11) gedreht, so dient die Aussparung (4) als Spielraum für die Zunge (1); bei der Drehung wird die Zunge (1) vermöge der abgeschrägten Gleitfläche (2) unter den Schenkel (12) der C-Profilscheine (11) gedrückt. Die Zunge (1) kann mit der Platte, die die Klemmscheibe bildet, durch einen dünnen Steg (5) verbunden sein. Dieser Steg (5) ist von Vorteil bei der Herstellung von gegossenen Ausführungsformen der erfindungsgemäßen Klemmscheibe. In dieser Abbildung sind besonders deutlich die Rippen (3a) auf der Oberseite (7) der Platte, die die Klemmscheibe bildet, zu erkennen.

Der Vorteil der erfindungsgemäßen Klemmscheibe besteht darin, daß sie an beliebiger Stelle in die Schiene von unterschnittenem C-Profil hineingeschoben und befestigt werden kann, ohne erst von einem offenen Ende einer C-Profilschiene her hineingeschoben werden zu müssen.

Legende

1   Zunge
2   Gleitfläche
3a  Rippen
3b  Erhöhung
4   Aussparung
5   Steg
6   Unterseite
    (der Platte, die die Klemmscheibe bildet)
7   Oberseite
    (der Platte, die die Klemmscheibe bildet)
8   Schlitz
9   Rohr

10 Gewindebohrung
11 Schiene von unterschnittenem C-Profil
12 Schenkel

## Patentansprüche

1. Klemmscheibe für Schienen (11) von unterschnittenem C-Profil, ausgebildet als im wesentlichen rechteckige Platte, die mit den Längsseiten parallel zur Schiene (11) durch den Raum zwischen den Schenkeln (12) der offenen Seite des C-Profils geht und, nach einer Drehung um 90°, mit den Breitseiten parallel zur Schiene (11) in den Raum unter diese Schenkel (12) paßt, dadurch gekennzeichnet, daß an zwei diagonal einander gegenüberliegenden Ecken zurückgesetzte Zungen (1) mit abgeschrägten, erhobenen Gleitflächen (2) und an den beiden anderen diagonal einander gegenüberliegenden Ecken Erhöhungen (3b) angeordnet sind und daß die Zungen (1) und die Erhöhungen (3b) so weit über die Oberseite (7) der rechteckigen Platte erhoben sind, daß sie gegen die Schenkel (12) der Schiene (11) von unterschnittenem C-Profil stoßen.

2. Klemmscheibe nach Anspruch 1, dadurch gekennzeichnet, daß auf der Oberseite (7) der Platte, die die Klemmscheibe bildet, Rippen (3a) befindlich sind, die Schlitze (8) bilden und ein Rohr (9) umschließen, welches eine Gewindebohrung (10) aufnimmt, die bis zur Unterseite (6) der Platte, die die Klemmscheibe bildet, durchstößt.

3. Klemmscheibe nach Anspruch 1 und 2 dadurch gekennzeichnet, daß die Erhöhungen (3b) und die Rippen (3a) gleichermaßen ausgebildet sind.

4. Klemmscheibe nach mindestens einem der Ansprüche 1 bis 3, dadurch gekennzeichnet, daß sie aus Aluminium gegossen ist.

## Claims

1. Clamping plate for rails (11) of undercut C-frame design; the plate is in the form of a rectangle and, with its longitudinal sides parallel to the rail (11), it fits in the space between the uprights (12) of the open side of the C-frame. When turned through 90°, it fits in the space under these uprights (12) with its latitudinal sides parallel to the rail (11).
The plate is characterised by two backspaced tabs (1) with chamfered, raised non-friction surfaces (2) in two diagonally opposite corners, and, in the other two diagonally opposite corners, by elevations (3b); the tabs (1) and the elevations (3b) are raised above the upper surface (7) of the rectangular plate so that they make contact with the uprights (12) of the rail (11) in undercut C-frame design.

2. Clamping plate according to claim 1, characterised by ribs (3a) on the upper surface (7) of the plate which constitutes the clamping plate; these ribs form slits (8) and enclose a pipe (9), which accomodates a threaded boring (10) which penetrates through to the lower surface (6) of the plate which constitutes the clamping plate.

3. Clamping plate according to claim 1 and 2, characterised by the fact that the elevations (3b) and the ribs (3a) are modelled in like manner.

4. Clamping plate according to at least one of the claims 1 to 3, characterised by the fact that it is cast in aluminium.

## Revendications

1. Disque de serrage pour rails (11) en profilé en C évidé, formé en tant que plaque essentiellement rectangulaire qui, avec les grands côtés parallèles au rail (11), passe dans l'espace entre les montants (12) du côté ouvert du profilé en C et qui, après rotation de 90°, s'adapte dans l'espace situé sous ces montants (12), les côtés larges étant parallèles au rail (11), caractérisé par le fait que des languettes en retrait (1) aux surfaces de glissement chanfreinées et surélevées (2) sont disposées sur deux angles diagonalement en face l'un de l'autre et que des réhaussements (3b) sont disposés sur les deux autres angles diagonalement en face l'un de l'autre et que les languettes (1) ainsi que les réhaussements (3b) s'élèvent à une telle hauteur au-dessus de la face supérieure de la plaque rectangulaire qu'ils butent contre les montants (12) du rail (11) en profilé en C évidé.

2. Disque de serrage selon spécification 1 caractérisé par le fait que, sur la face supérieure (7) de la plaque qui forme le disque de serrage, sont disposées des nervures (3a) formant des fentes (8) et qui entourent un tube (9) qui reçoit un taraudage (10) passant à travers la plaque jusqu'à la face inférieure (6) qui forme le disque de serrage.

3. Disque de serrage selon spécifications 1 et 2 caractérisé par le fait que les réhaussements (3b) et que les nervures (3a) sont formés de la même manière.

4. Disque de serrage selon au moins l'une des spécifications de 1 à 3 caractérisé par le fait qu'il est coulé en aluminium.

Fig.1

Fig.2

Fig.3